# EUROPÄISCHE PATENTSCHRIFT

(11) **EP 1 464 556 B1**
(45) Veröffentlichungstag und Bekanntmachung des Hinweises auf die Patenterteilung: **10.05.2006**
(21) Anmeldenummer: 04005381.1
(22) Anmeldetag: 06.03.2004
(51) Int. Cl.: B60T 17/00, B60G 17/015, B60T 11/32, B60T 17/02

(54) **Druckluftaufbereitungseinrichtung für Kraftfahrzeug-Druckluftanlagen**
Compressed air processing system for vehicles
Système de traitement de l'air comprimé pour véhicules

(30) Priorität: 01.04.2003 DE 10314643
(43) Veröffentlichungstag der Anmeldung: 06.10.2004
(73) Patentinhaber: Haldex Brake Products GmbH, 69123 Heidelberg (DE)
(72) Erfinder: Heer, Siegfried, 69168 Wiesloch (DE)
(74) Vertreter: Rehberg Hüppe + Partner

(56) Entgegenhaltungen:
- DE-A- 19 835 638
- US-A- 5 678 900

## Beschreibung

Die Erfindung bezieht sich auf eine Druckluftaufbereitungseinrichtung für Kraftfahrzeug-Druckluftanlagen mit den im Oberbegriff des Patentanspruchs 1 angegebenen Merkmalen. In solchen Druckluftaufbereitungseinrichtungen sind üblicherweise die Elemente eines Druckreglers, eines Lufttrockners und eines Mehrkreisschutzventils mit seinen Überströmventilen zusammengefasst. Eine solche Druckluftaufbereitungseinrichtung weist auch eine elektronische Steuereinheit zum Steuern der Ventile des Druckreglers, des Lufttrockners und des Mehrkreisschutzventils auf.

### STAND DER TECHNIK

Eine Druckluftaufbereitungseinrichtung der eingangs beschriebenen Art ist aus der DE 195 44 621 C1, der DE 196 38 226 C1, der DE 198 34 705 C2 oder auch der DE 198 35 638 A1 bekannt. Es wird eine gemeinsame Baueinheit gebildet, in der der Druckregler, der Lufttrockner und ein Mehrkreisschutzventil zusammengefasst sind. Das Mehrkreisschutzventil weist für jeden Kreis ein Überströmventil mit begrenzter Rückströmung auf. Von den Überströmventilen führen Leitungen zu Behältern, die den einzelnen Kreisen zugeordnet sind. Üblicherweise sind die Behälter der Kreise I und II den beiden Kreisen einer Betriebsbremsanlage zugeordnet. Weitere Kreise sind für die Versorgung des Handbremsventils sowie von Nebenaggregaten vorgesehen und ausgebildet. Auf diese Weise kann auch ein fünfter Kreis gebildet sein, der ein Überströmventil des Mehrkreisschutzventils umfasst und der über eine Leitung zu einem Vorratsbehälter führt, an dem die Luftfederung des Kraftfahrzeugs angeschlossen ist. Auf diese Weise wird eine Luftfederanlage mit Druckluft versorgt und abgesichert. Die Druckluftaufbereitungseinrichtungen verfügen auch jeweils über eine elektronische Steuereinheit, also eine spezielle Steuereinheit, die auf die Druckluftaufbereitungseinrichtung abgestimmt ist und mit der die einzelnen Ventile des Druckreglers, des Lufttrockners und des Mehrkreisschutzventils angesteuert werden.

Aus der DE 101 25 204 A1 ist ein niveaugeregeltes Federungssystem für Fahrzeuge bekannt, welches insbesondere für Fahrzeuge mit einer Luftfederung bestimmt ist. Es ist eine Niveauregelung für einzelne Federelemente vorgesehen, wobei die Federelemente in der Nähe der Räder des Fahrzeuges vorgesehen sind. Die Niveauregelung wird über eine Batterie mit elektrischer Spannung versorgt und ist auch an eine elektrische CAN-Bus-Leitung angeschlossen, so dass die Niveauregelung elektrische Signale empfangen und weiterverarbeiten kann. Zu den Rädern bzw. Federelementen einer Achse und damit zur rechten und linken Fahrzeugseite führt je eine gemeinsame Steuerleitung. Es bleibt offen, ob es sich dabei um eine elektrische oder eine pneumatische Steuerleitung handelt. Das niveaugeregelte Federungssystem macht auch keine Aussage über eine Druckluftaufbereitungseinrichtung.

Aus der DE 100 38 266 A1 ist ein Verfahren zum Auffüllen einer Luftfederanlage über einen Lufttrockner vorgesehen. Allein für die Versorgung und Steuerung der Luftfederanlage ist ein Kompressor und ein nachgeschalteter Lufttrockner vorgesehen. Nach einem Rückschlagventil, welches über eine Drossel überbrückt ist, zweigen Versorgungsleitungen zu steuerbaren Wegeventilen ab, die dem jeweiligen Luftfederbalg vorgeordnet sind. Außerdem ist ein Ablassventil als Bestandteil eines Druckreglers vorgesehen, der auch im Sinne einer Regeneration des Lufttrockners betrieben werden kann. Der Luftfederanlage ist eine elektronische Steuereinrichtung zugeordnet, die ausschließlich die Elemente der Luftfederanlage sowie der zugehörigen Druckluftaufbereitungseinrichtung steuert. Über die Anordnung und Ausbildung einer Bremsanlage werden keine Ausführungen gemacht.

Es ist jedoch auch bereits bekannt, insbesondere Nutzfahrzeuge einerseits mit einer pneumatischen Bremsanlage und andererseits mit einer pneumatischen Luftfederungsanlage auszurüsten. Die Versorgung der Luftfederanlage mit Druckluft wird von einem Kreis der Druckluftaufbereitungseinrichtung abgenommen, der parallel zu den Bremskreisen vorgesehen ist. Die auf diese Weise angeschlossene Luftfederungsanlage besitzt meist mehrere Ventile, die zumindest teilweise als elektrisch ansteuerbare Magnetventile ausgebildet sind.

Für die Ansteuerung dieser Magnetventile der Luftfederungsanlage ist eine gesonderte elektronische Steuereinheit vorgesehen. Diese gesonderte elektronische Steuereinheit ist örtlich getrennt von der elektronischen Steuereinheit der Druckluftaufbereitungseinrichtung, beispielsweise im Bereich der Fahrerkabine, vorgesehen, wobei entsprechende elektrische Leitungen zu den Magnetventilen der Luftfederungsanlage führen. Der Bau- und Montageaufwand für die beiden elektronischen Steuereinheiten ist nicht unbeträchtlich. Auch die Anzahl der Anschlüsse für die elektrische Versorgung der beiden elektronischen Steuereinheiten und die Anzahl der pneumatischen Leitungen auf dem Fahrzeug ist relativ groß.

Aus der DE 41 11 023 C2 ist ein elektronisches System für ein Fahrzeug bekannt, wobei in entsprechender Staffelung unterschiedliche Hierarchieebenen beschrieben werden. Kennzeichnend für diesen Stand der Technik ist jeweils ein eigenes spezielles Steuergerät, welches dem betreffenden Element des Fahrzeuges zugeordnet ist. So gibt es ein spezielles Steuergerät für den Motor, ein spezielles Steuergerät für das Getriebe, ein spezielles Steuergerät für die Bremse usw.. Diesen speziellen Steuergeräten ist ein zentrales Steuergerät vorgeschaltet bzw. übergeordnet. Das zentrale Steuergerät und die speziellen Steuergeräte sind über Busleitungen verbunden, so dass elektronische Signale weitergeleitet bzw. ausgetauscht werden können.

### AUFGABE DER ERFINDUNG

Der Erfindung liegt die Aufgabe zugrunde, eine Druckluftaufbereitungseinrichtung der eingangs beschriebenen Art so weiterzubilden, dass der bauliche Aufwand auf einem Kraftfahrzeug für die Druckluftaufbereitung einerseits und die Luftfederanlage andererseits reduziert wird.

### LÖSUNG

Erfindungsgemäß wird dies bei einer Druckluftaufbereitungseinrichtung der eingangs beschriebenen Art dadurch erreicht, dass die elektronische Steuereinheit der Druckluftaufbereitungseinrichtung auch zum Steuern von Ventilen einer Luftfederanlage ausgebildet ist.

### BESCHREIBUNG DER ERFINDUNG

Die Erfindung geht von dem Gedanken aus, statt der bisher voneinander örtlich und funktional getrennten Ausbildung und Anordnung von zwei elektronischen Steuereinheiten abzugehen und eine gemeinsame elektronische Steuereinheit zu schaffen, die sowohl die Funktionen, wie sie für die Druckluftaufbereitung erforderlich sind, als auch die Funktionen für die Versorgung und Steuerung der Luftfederanlage, gemeinsam erbringt. Hieraus resultiert nicht nur eine Reduzierung des Bauaufwands, sondern es werden auch die Anzahl der elektrischen und pneumatischen Verbindungsleitungen reduziert. Die bisher übliche örtliche Trennung wird aufgehoben und es ergibt sich auch die Möglichkeit, die Elemente der gemeinsamen elektronischen Steuereinheit nunmehr mit reduziertem Raumbedarf unterzubringen. Trotz der Zusammenfassung der beiden elektronischen Steuereinheiten zu einer gemeinsamen Einheit können die pneumatischen Elemente der Druckluftaufbereitung einerseits und der Luftfederung andererseits örtlich getrennt voneinander oder auch an gemeinsamer Stelle angeordnet werden, wie dies für den jeweiligen Anwendungsfall vorteilhaft erscheint. Es sind mehrere Integrationsstufen denkbar. Schließlich können auch die elektrischen Elemente der elektronischen Steuereinheit und die pneumatischen Elemente, insbesondere Ventile, der Druckluftaufbereitungseinrichtung einerseits und der Luftfederanlage andererseits in einer Baueinheit integriert werden.

Besonders vorteilhaft ist es, wenn die Ventile des Druckreglers, des Lufttrockners, des Mehrkreisschutzventils und der Luftfederanlage in einer Baueinheit zusammengefasst sind. Damit können beispielsweise die pneumatischen Elemente in einem gemeinsamen Gehäuse untergebracht sein. Es ist auch möglich, die pneumatischen Elemente der Druckluftaufbereitungseiririchtung in einem ersten Teilgehäuse und die Elemente der Luftfederanlage in einem zweiten Teilgehäuse zusammenzufassen und beide Teilgehäuse aneinander anzuflanschen.

Die Integration kann auch noch weitergeführt werden, nämlich unter Einschluss der gemeinsamen elektronischen Steuereinheit. Es entsteht dann eine gemeinsame Baueinheit, die einerseits die Ventile des Druckreglers, des Lufttrockners, des Mehrkreisschutzventils und der Luftfederanlage und andererseits die gemeinsame elektronische Steuereinheit umfasst.

Es ist aber auch möglich, dass die gemeinsame elektronische Steuereinheit mit elektrischen Leitungen einerseits mit der die Ventile des Druckreglers, des Lufttrockners und des Mehrkreisschutzventils aufnehmenden Baueinheit und andererseits mit der die Ventile der Luftfederanlage aufnehmenden Baueinheit verbunden ist, während die beiden Baueinheiten über eine pneumatische Leitung in Verbindung stehen, über die auch die die Ventile der Luftfederanlage aufnehmende Baueinheit mit Druckluft versorgt wird. Dies kann unter Zwischenschaltung eines Druckluftbehälters, aber auch ohne einen solchen Druckluftbehälter erfolgen. Im letzteren Falle erfolgt die elektronische Ansteuerung der Ventile der Druckluftaufbereitungseinrichtung in der Weise, dass bei ordnungsgemäß befüllten Betriebsbremskreisen die zugeordneten Überströmventile offen stehen und so die Ventile der Luftfederanlage mit Druckluft versorgt werden.

Es besteht auch die Möglichkeit, dass die gemeinsame elektronische Steuereinheit mit einer die Ventile des Druckreglers, des Lufttrockners und des Mehrkreisschutzventils aufnehmenden Baueinheit zusammengefasst ist. Andererseits besteht eine Integrationsmöglichkeit zu einer Baueinheit, die die Ventile der Luftfederanlage aufweist, so dass die die pneumatischen Elemente der Druckluftaufbereitung aufnehmende Baueinheit selbst ohne eine elektronische Steuereinheit ausgebildet ist.

Insbesondere kann die gemeinsame elektronische Steuereinheit einen gemeinsamen Prozessor für die Auswertung und Regelung der Ventile des Druckreglers, des Lufttrockners, des Mehrkreisschutzventils und der Luftfederanlage aufweisen. Damit können Signale von z. B. Drucksensoren in doppelter Weise genutzt werden, nämlich einmal für die Druckluftaufbereitung und zum anderen für die Luftfederanlage. Es kann auch eine Abstimmung der Elemente untereinander erfolgen, etwa in der Weise, dass die gemeinsame elektronische Steuereinheit in der Weise ausgebildet ist, dass z. B. eine bevorzugte Befüllung der beiden Betriebsbremskreise erfolgt, bevor die Luftfederanlage mit Druckluft versorgt wird oder umgekehrt.

Die gemeinsame elektronische Steuereinheit bietet die Möglichkeit, dass in einfacher Weise den Erfordernissen der Druckluftaufbereitung einerseits und denen der Luftfederanlage andererseits Rechnung getragen wird, indem die beiden Erfordernisse aufeinander abgestimmt und eingerichtet werden.

Es kann ein Vorsteuerventil vorgesehen sein, das einerseits Ventile des Druckreglers und/oder des Lufttrockners und/oder des Mehrkreisschutzventils und andererseits mindestens ein Ventil der Luftfederanlage ansteuert. Damit wird das gemeinsame Vorsteuerventil sowohl bei der Druckluftaufbereitung als auch bei der Steuerung der Luftfederanlage eingesetzt, so dass es in doppelter Hinsicht genutzt wird.

Insbesondere besteht die Möglichkeit, dass das Mehrkreisschutzventil zur Absicherung der beiden Betriebsbremskreise ausgebildet ist und das oder die Ventile der Luftfederanlage aus Vorratsbehältern der beiden Betriebsbremskreise versorgt sind. Es versteht sich, dass die Versorgung der Ventile der Luftfederanlage aus den Vorratsbehältern der Betriebsbremskreise dann möglich ist, wenn die Betriebsbremskreise ordnungsgemäß aufgefüllt sind und die zugehörigen Überströmventile offen stehen.

Bei allen Ausführungsformen der Druckluftaufbereitungseinrichtung kann zusätzlich eine Anzeigevorrichtung vorgesehen sein, die über eine Datenleitung mit der gemeinsamen elektronischen Steuereinheit in Verbindung steht. Eine solche Anzeigevorrichtung ist zweckmäßig in der Fahrerkabine des Kraftfahrzeugs angeordnet. Die Anzeigevorrichtung erlaubt einen Datenaustausch über CAN-BUS. Über diese Datenleitung können auch die jeweiligen Betriebszustände der Ventile angezeigt werden, beispielsweise der Ventile, die die Luftfederanlage steuern. Die Anzeigevorrichtung kann auch mit Bedienelementen ausgestattet sein, insbesondere wenn diese in dem Fahrerhaus angeordnet sind. Auf diese Weise kann dann der Fahrer des Kraftfahrzeugs beispielsweise die Hinterachse des Fahrzeugs anheben oder absenken oder sonstige Steuervorgänge auslösen.

### KURZBESCHREIBUNG DER FIGUREN

Die Erfindung wird anhand bevorzugter Ausführungsbeispiele weiter erläutert und beschrieben.
- **Fig. 1**: zeigt einen schematischen Schaltplan der Druckluftaufbereitungseinrichtung mit Luftfederanlage des Kraftfahrzeugs.
- **Fig. 2**: zeigt einen Schaltplan betreffend eine zweite Ausführungsform.
- **Fig. 3**: zeigt eine dritte Ausführungsform, bei der die gemeinsame elektronische Steuereinheit den Elementen der Druckluftaufbereitung zugeordnet ist.
- **Fig. 4**: zeigt eine Ausführungsform, bei der die gemeinsame elektronische Steuereinheit den Elementen der Luftfederanlage zugeordnet ist.
- **Fig. 5**: zeigt eine Ausführungsform, bei der die gemeinsame elektronische Steuereinheit und die pneumatischen Elemente der Druckluftaufbereitung und der Luftfederanlage als Baueinheit zusammengefasst sind.
- **Fig. 6**: zeigt eine Ausführungsmöglichkeit der gemeinsamen Baueinheit.

### FIGURENBESCHREIBUNG

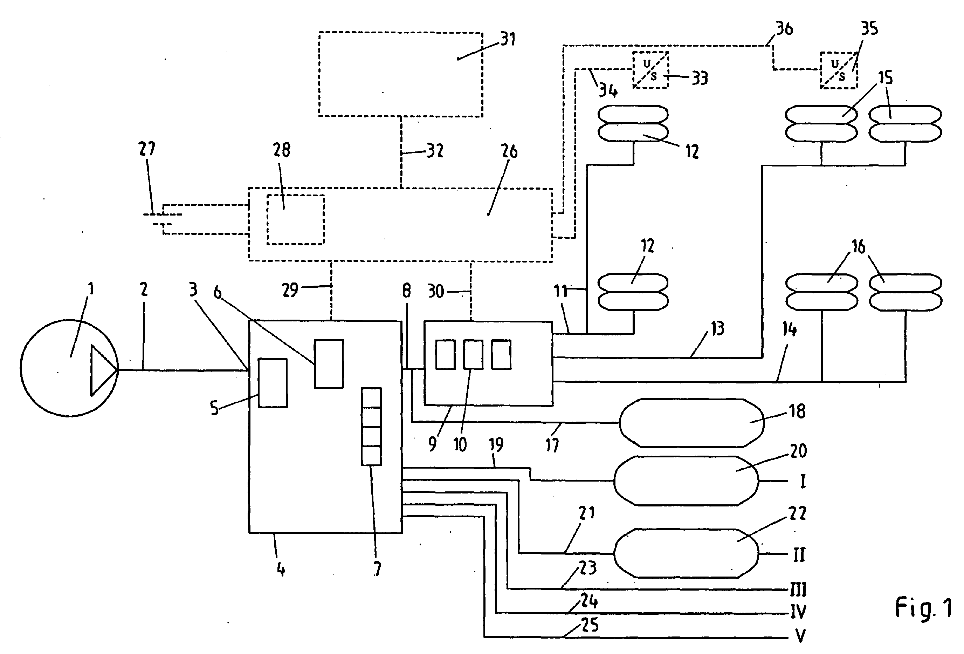

In **Fig. 1,** wie auch in sämtlichen weiteren Figuren, sind die pneumatischen Elemente und Teile in durchgezogener Linienführung dargestellt, während elektrische Elemente und Leitungen in gestrichelter Linienführung verdeutlicht sind.

Von einem Kompressor 1 führt eine pneumatische Leitung 2 zu einem Anschluss 3 an einer Baueinheit 4. Die Baueinheit 4 kann insbesondere als gemeinsames Gehäuse ausgebildet sein. In der Baueinheit 4 sind Ventile 5 eines Druckreglers, Ventile 6 eines Lufttrockners und Ventile 7 eines Mehrkreisschutzventils symbolhaft dargestellt. Diese Elemente sind in an sich bekannter und erforderlicher Weise miteinander verbunden, so dass sie die Funktionen der Druckluftaufbereitung erbringen können. Von der Baueinheit 4 führt eine pneumatische Verbindungsleitung 8 zu einer Baueinheit 9. Auch die Baueinheit 9 kann in Form eines Gehäuses ausgebildet sein. Die Baueinheit 9 nimmt eines oder mehrere Ventile 10 einer Luftfederanlage auf. Von der Baueinheit 9 führt eine pneumatische Leitung 11 zu Luftfederbälgen 12, die der Vorderachse eines Kraftfahrzeugs bzw. Nutzfahrzeugs zugeordnet sein mögen. Weitere pneumatische Leitungen 13 und 14 führen zu Luftfederbälgen 15 bzw. 16, die der rechten und linken Seite einer als Doppelachse ausgebildeten Hinterachse zugeordnet sind.

Von der Baueinheit 4 zweigt die pneumatische Verbindungsleitung 8 zu der Baueinheit 9 ab. In einer an die Leitung 8 angeschlossenen Leitung 17 kann Druckluft zu einem Vorratsbehälter 18 überführt werden, der der Luftfederanlage zugeordnet ist. Außerdem zweigt von dem betreffenden Überströmventil der Ventile 7 des Mehrkreisschutzventils eine Leitung 19 ab, die zu einem Vorratsbehälter 20 führt, der einen ersten Kreis l repräsentiert.

Dieser Kreis I ist üblicherweise der erste Kreis der Betriebsbremsanlage. Ebenso führt eine Leitung 21 zu einem Vorratsbehälter 22 eines Kreises II, über den der zweite Betriebsbremskreis mit Druckluft versorgt wird. Weitere Leitungen 23, 24 und 25 können der Anhängerbremsung, der Federspeicherbremse bzw. entsprechenden Nebenverbrauchern zugeordnet sein. In diesen Kreisen III bis V müssen nicht unbedingt Vorratsbehälter vorgesehen sein.

Es ist eine gemeinsame elektronische Steuereinheit 26 vorgesehen, die über Leitungen 27 mit elektrischer Spannung versorgt wird. Bestandteile der Steuereinheit 26 sind ein gemeinsamer Prozessor 28, der schematisch verdeutlicht ist. Außerdem weist die elektronische Steuereinheit 26 noch eine ganze Anzahl von Überwachungs- und Steuerelementen auf, so beispielsweise Sensoren, Messbrücken, Verstärker, Auswerteeinheiten, Speicher, Steuereinheiten und dergleichen. Diese Elemente sind innerhalb der gemeinsamen elektronischen Steuereinheit 26 so untergebracht und ausgebildet, dass sie einerseits die Elemente bzw. Ventile 5, 6, 7 in der Baueinheit 4, die der Druckluftaufbereitung dient, als auch die Elemente der Baueinheit 9 steuern kann. Auch die Steuerung des Kompressors 1, falls eine solche vorgesehen ist, kann über die gemeinsame Steuereinheit 26 erfolgen. Der Datenaustausch zwischen den Baueinheiten 4 und 9 und der gemeinsamen Steuereinheit 26 erfolgt über Leitungen 29 bzw. 30. Zweckmäßig ist eine Anzeigevorrichtung 31 vorgesehen, die vorzugsweise in dem Fahrerhaus des Kraftfahrzeugs untergebracht ist. Die Anzeigevorrichtung 31 ist mit der Steuereinheit 26 über eine Leitung 32 verbunden. Über diese Leitung 32 kann ein Datenaustausch über CAN-BUS erfolgen. Auch die Weiterleitung und der Austausch weiterer Daten kann über eine CAN-BUS-Leitung erfolgen, deren Anschluss hier jedoch nicht weiter dargestellt ist.

Der Vorderachse ist ein Wegsensor 33 zugeordnet, von dem eine Leitung 34 zu der elektronischen Steuereinheit 26 führt. Analog besitzt auch die Hinterachse einen Wegsensor 35, dessen Spannungssignale über eine Leitung 36 der Steuereinheit 26 zugeführt werden.

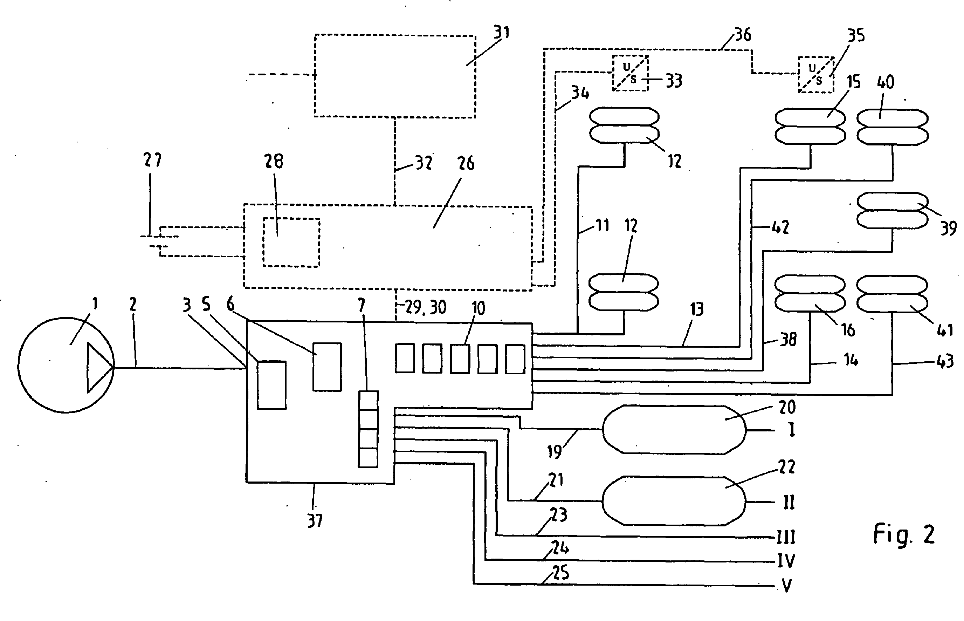

**Fig. 2** zeigt eine weitere Ausführungsform anhand eines schematisierten Schaltplans. Wegen der zugehörigen Beschreibung kann auf das Ausführungsbeispiel der Fig. 1 verwiesen werden. Im Unterschied dazu sind bei der Ausführungsform gemäß Fig. 2 die beiden Baueinheiten 4 und 9 in einer gemeinsamen Baueinheit 37 zusammengefasst, so dass dort, beispielsweise in einem gemeinsamen Gehäuse, einerseits die Ventile 5 des Druckreglers, die Ventile 6 des Lufttrockners und die Ventile 10 der Luftfederanlage gemeinsam untergebracht sind. Die elektrische Verbindung zwischen der gemeinsamen Steuereinheit 26 und der gemeinsamen Baueinheit 37 kann hier über eine einzige zusammengefasste Leitung 29, 30 erfolgen.

Zusätzlich zu den Elementen, wie sie aus **Fig. 1** bekannt sind, ist eine Leitung 38 vorgesehen, die zu einem Liftbalg 39 einer Liftachse im Bereich der Hinterachse führt. Die Leitung 8 ist intern in der gemeinsamen Baueinheit 37 untergebracht. Sie wird unter Umgehung der Ventile 7 des Mehrkreisschutzventils mit Druckluft versorgt. Die Luftfederbälge 40 und 41 der Liftachse werden über Leitungen 42 bzw. 43 bedient.

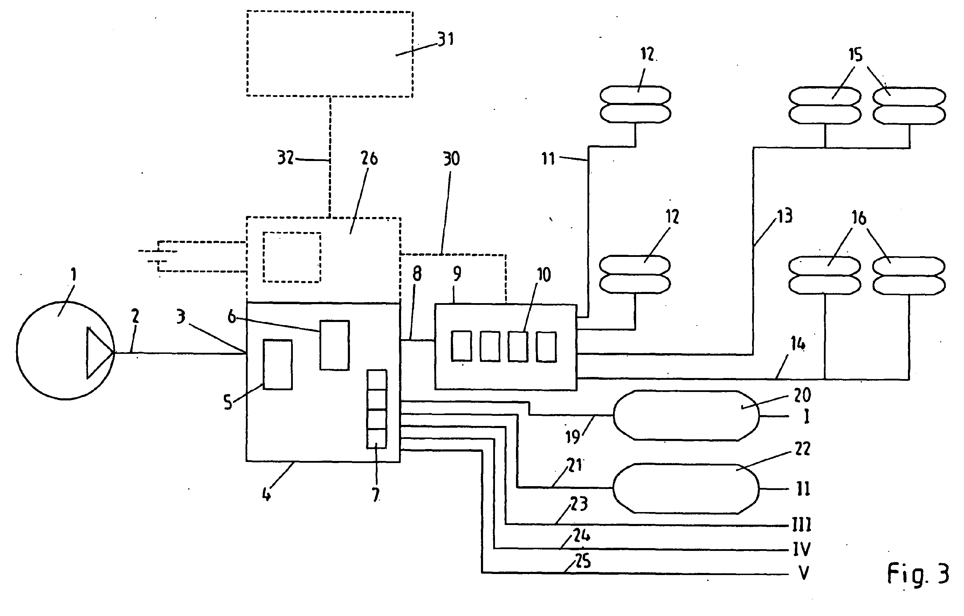

Auch das Ausführungsbeispiel der **Fig. 3** ist ähnlich aufgebaut wie die zuvor beschriebenen Ausführungsbeispiele. Wesentlich ist hier zu erkennen, dass die Baueinheiten 4 und 9 ähnlich wie in Fig. 1 getrennt voneinander verwirklicht sind. Die gemeinsame elektronische Steuereinheit 26 ist hier örtlich der Baueinheit 4 zugeordnet und mit dieser zusammengefasst, während örtlich getrennt davon die Baueinheit 9 verwirklicht ist, die über die Leitung 8 mit Druckluft versorgt wird, während die Ansteuerung der Ventile 10 der Luftfederanlage über die elektrische Leitung 30 erfolgt.

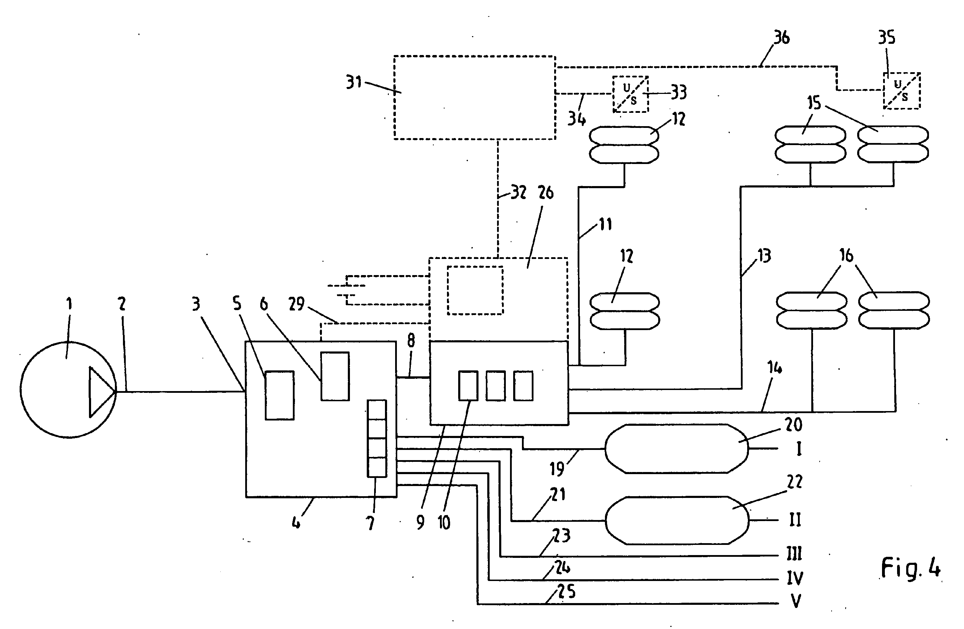

**Fig. 4** zeigt gegenüber Fig. 3 eine Abwandlung. Der Unterschied besteht darin, dass hier die gemeinsame elektronische Steuereinheit 26 mit der Baueinheit 9 baulich zusammengefasst ist, die die Ventile 10 der Luftfederanlage aufnimmt.

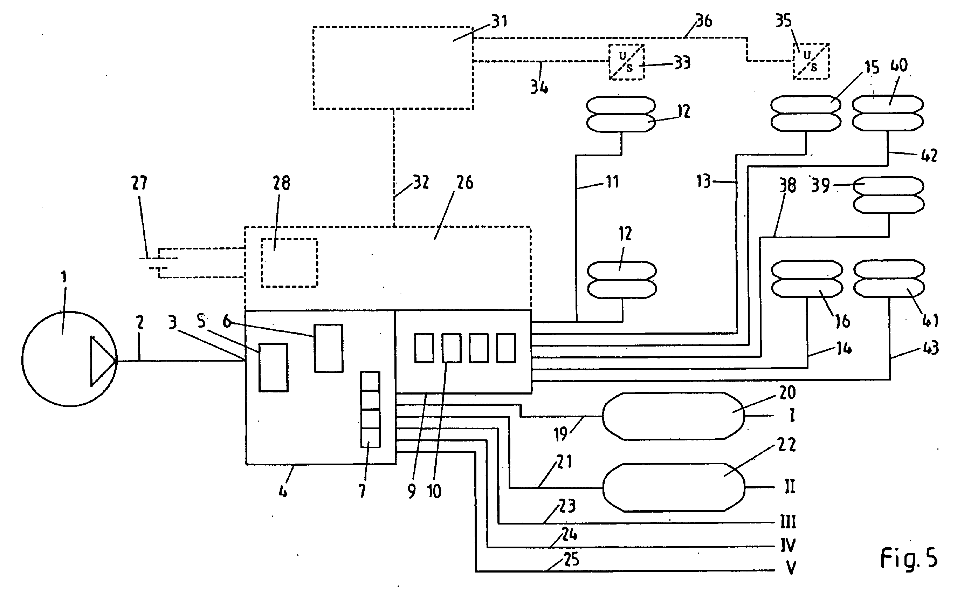

**Fig. 5** verdeutlicht schließlich die Integration, bei der die gemeinsame Steuereinheit 26, die Baueinheit 4 und die Baueinheit 9 baulich vereinigt und örtlich konzentriert vorgesehen sind. Die Leitungen 34 und 36 führen hier zunächst zu der Anzeigevorrichtung 31 und erst dann über die Leitung 32 zu der gemeinsamen Steuereinheit 26. Auf diese Weise können gemäß der Ausführungsform der Fig. 5 die pneumatischen Elemente der Baueinheiten 4 und 9 und die elektrischen Elemente der gemeinsamen Steuereinheit 26 örtlich konzentriert und mit geringem Raumbedarf untergebracht werden.

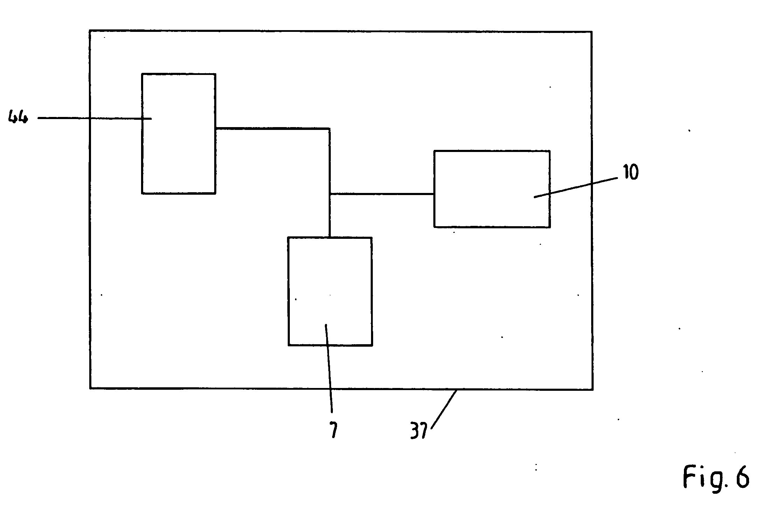

In **Fig. 6** ist eine gemeinsame Baueinheit 37 dargestellt, in der Ventile, die der Druckluftaufbereitung dienen, und Ventile der Luftfederanlage untergebracht sind. Beispielhaft sind hier nur Ventile 7 des Mehrkreisschutzventils und ein Ventil 10 der Luftfederanlage dargestellt. In der Baueinheit 37 ist ein Vorsteuerventil 44 untergebracht, über welches die Ventile 7 und 10 gemeinsam angesteuert werden. Entsprechendes gilt auch für die Ventile 5 bzw. 6, obwohl diese hier nicht dargestellt sind.

### BEZUGSZEICHENLISTE

- 1: Kompressor
- 2: Leitung
- 3: Anschluss
- 4: Baueinheit
- 5: Ventile Druckregler
- 6: Ventile Lufttrockner
- 7: Ventile Mehrkreisschutzventil
- 8: pneum. Verbindungsleitung
- 9: Baueinheit
- 10: Ventile Luftfederanlage

- 11: pneumatische Leitung
- 12: Luftfederbalg
- 13: pneumatische Leitung
- 14: pneumatische Leitung
- 15: Luftfederbalg
- 16: Luftfederbalg
- 17: pneumatische Leitung
- 18: Vorratsbehälter
- 19: Leitung
- 20: Vorratsbehälter

- 21: Leitung
- 22: Vorratsbehälter
- 23: Leitung
- 24: Leitung
- 25: Leitung
- 26: elektronische Steuereinheit
- 27: Leitungen
- 28: Prozessor
- 29: Leitung
- 30: Leitung

- 31: Anzeigevorrichtung
- 32: Leitung
- 33: Wegsensor
- 34: Leitung
- 35: Wegsensor
- 36: Leitung
- 37: Baueinheit
- 38: Leitung
- 39: Liftbalg
- 40: Luftfederbalg

- 41: Luftfederbalg
- 42: Leitung
- 43: Leitung
- 44: Vorsteuerventil

## Patentansprüche

1. Druckluftaufbereitungseinrichtung mit einem Druckregler, einem Lufttrockner, einem Mehrkreisschutzventil und einer elektronischen Steuereinheit (26) zum Steuern der Ventile (5) des Druckreglers, der Ventile (6) des Lufttrockners und der Ventile (7) des Mehrkreisschutzventils, **dadurch gekennzeichnet, dass** die elektronische Steuereinheit (26) der Druckluftaufbereitungseinrichtung auch zum Steuern von Ventilen (10) einer Luftfederanlage ausgebildet ist.

2. Druckluftaufbereitungseinrichtung nach Anspruch 1, **dadurch gekennzeichnet, dass** die Ventile (5) des Druckreglers, die Ventile (6) des Lufttrockners, die Ventile (7) des Mehrkreisschutzventils und die Ventile (10) der Luftfederanlage in einer Baueinheit (37) zusammengefasst sind.

3. Druckluftaufbereitungseinrichtung nach Anspruch 1 und 2, **dadurch gekennzeichnet, dass** eine gemeinsame Baueinheit vorgesehen ist, die einerseits die Ventile (5) des Druckreglers, die Ventile (6) des Lufttrockners, die Ventile (7) des Mehrkreisschutzventils und die Ventile (10) der Luftfederanlage und andererseits die gemeinsame elektronische Steuereinheit (26) umfasst.

4. Druckluftaufbereitungseinrichtung nach Anspruch 1, **dadurch gekennzeichnet, dass** die gemeinsame elektronische Steuereinheit (26) mit elektrischen Leitungen (29, 30) einerseits mit der die Ventile (5) des Druckreglers, die Ventile (6) des Lufttrockners und die Ventile (7) des Mehrkreisschutzventils aufnehmenden Baueinheit (4) und andererseits mit der die Ventile (10) der Luftfederanlage aufnehmenden Baueinheit (9) verbunden ist, während die beiden Baueinheiten (4 und 9) über eine pneumatische Leitung (8) in Verbindung stehen.

5. Druckluftaufbereitungseinrichtung nach Anspruch 1, **dadurch gekennzeichnet, dass** die gemeinsame elektronische Steuereinheit (26) mit einer die Ventile (5) des Druckreglers, die Ventile (6) des Lufttrockners und die Ventile (7) des Mehrkreisschutzventils aufnehmenden Baueinheit (4) zusammengefasst ist.

6. Druckluftaufbereitungseinrichtung nach Anspruch 1, **dadurch gekennzeichnet, dass** die gemeinsame elektronische Steuereinheit (26) mit einer die Ventile (10) der Luftfederanlage aufnehmenden Baueinheit (9) zusammengefasst ist.

7. Druckluftaufbereitungseinrichtung nach Anspruch 1, **dadurch gekennzeichnet, dass** die gemeinsame elektronische Steuereinheit (26) einen gemeinsamen Prozessor (28) für die Auswertung und Regelung der Ventile (5) des Druckreglers, der Ventile (6) des Lufttrockners, der Ventile (7) des Mehrkreisschutzventils und der Ventile (10) der Luftfederanlage aufweist.

8. Druckluftaufbereitungseinrichtung nach Anspruch 1 oder 7, **dadurch gekennzeichnet, dass** ein Vorsteuerventil (44) vorgesehen ist, das einerseits Ventile (5) des Druckreglers und/oder Ventile (6) des Lufttrockners und/oder Ventile (7) des Mehrkreisschutzventils und andererseits mindestens ein Ventil (10) der Luftfederanlage ansteuert.

9. Druckluftaufbereitungseinrichtung nach einem oder mehreren der Ansprüche 1 bis 8, **dadurch gekennzeichnet, dass** das Mehrkreisschutzventil zur Absicherung der beiden Betriebsbremskreise I, II ausgebildet ist und das oder die Ventile (10) der Luftfederanlage aus Vorratsbehältern (20, 22) der beiden Betriebsbremskreise versorgt sind.

10. Druckluftaufbereitungseinrichtung nach einem oder mehreren der Ansprüche 1 bis 9, **dadurch gekennzeichnet, dass** eine Anzeigevorrichtung (31) vorgesehen ist, die über eine Datenleitung (32) mit der gemeinsamen elektronischen Steuereinheit (26) in Verbindung steht.

## Claims

1. A compressed air processing system, comprising a pressure control unit, an air dryer, a multi-circuit protection valve and an electronic control unit (26) to control the valves (5) of the pressure control unit, the valves (6) of the air dryer and the valves (7) of the multi-circuit protection valve, **characterized in that** the electronic control unit (26) of the compressed air processing system is designed and arranged to control valves (10) of an air suspension system also.

2. Compressed air processing system of claim 1, **characterized in that** the valves (5) of the pressure control unit, the valves (6) of the air dryer, the valves (7) of the multi-circuit protection valve and the valves (10) of the air suspension system are designed and arranged to form a structural unit (37).

3. Compressed air processing system of claim 1 and 2, **characterized in that** a common structural unit is provided including on the one hand the valves (5) of the pressure control unit, the valves (6) of the air dryer, the valves (7) of the multi-circuit protection valve and the valves (10) of the air suspension system and on the other hand the common electronic control unit (26).

4. Compressed air processing system of claim 1, **characterized in that** the common electronic control unit (26) is connected by electric lines (29, 30) on the one hand with a structural unit (4) housing the valves (5) of the pressure control unit, the valves (6) of the air dryer and the valves (7) of the multi-circuit protection valve and is connected on the other hand with a structural unit (9) housing the valves (10) of the air suspension system, while the two structural units (4 and 9) are connected to each other with a pneumatic conduit (8).

5. Compressed air processing system of claim 1, **characterized in that** the common electronic control unit (26) is designed and arranged to form a structural unit (4) housing the valves (5) of the pressure control unit, the valves (6) of the air dryer and the valves (7) of the multi-circuit protection valve.

6. Compressed air processing system of claim 1, **characterized in that** the common electronic control unit (26) is designed and arranged to form a structural unit (9) housing the valves (10) of the air suspension system.

7. Compressed air processing system of claim 1, **characterized in that** the common electronic control unit (26) further includes a common processor (28) being designed and arranged to evaluate and control the valves (5) of the pressure control unit, the valves (6) of the air dryer, the valves (7) of the multi-circuit protection valve and the valves (10) of the air suspension system.

8. Compressed air processing system of claim 1 or 7, **characterized in that** a pilot valve (44) is provided, the pilot valve being designed and arranged to control on the one hand the valves (5) of the pressure control unit and/or the valves (6) of the air dryer and/or the valves (7) the multi-circuit protection valve and on the other hand at least one valve (10) of the suspension system.

9. Compressed air processing system of one or more of the claims 1 to 8, **characterized in that** the multi-circuit protection valve is designed and arranged to protect both service brake circuits I, II of the motor vehicle and **in that** the valve or the valves (10) of the air suspension system are supplied with compressed air from reservoirs (20, 22) of the two service brake circuits.

10. Compressed air processing system of one or more of the claims 1 to 9, **characterized in that** a display unit (31) is arranged, the display unit being connected to the common electronic control unit (26) by a data line (32).

## Revendications

1. Dispositif de traitement d'air comprimé comportant un régulateur de pression, un séchoir à air, une soupape de protection multicircuit et une unité de commande électronique (26) pour la commande des soupapes (5) du régulateur de pression, des soupapes (6) du séchoir à air et des soupapes (7) de la soupape de protection multicircuit, **caractérisé en ce que** l'unité de commande électronique (26) du dispositif de traitement d'air comprimé est conçue aussi pour la commande de soupapes (10) d'un système de ressorts pneumatiques.

2. Dispositif de traitement d'air comprimé selon la revendication 1, **caractérisé en ce que** les soupapes (5) du régulateur de pression, les soupapes (6) du séchoir à air, les soupapes (7) de la soupape de protection multicircuit et les soupapes (10) du système de ressorts pneumatiques sont réunies en une unité modulaire (37).

3. Dispositif de traitement d'air comprimé selon les revendications 1 et 2, **caractérisé en ce qu'**il est prévu une unité modulaire commune qui comprend d'une part les soupapes (5) du régulateur de pression, les soupapes (6) du séchoir à air, les soupapes (7) de la soupape de protection multicircuit et les soupapes (10) du système de ressorts pneumatiques, et d'autre part l'unité de commande électronique (26) commune.

4. Dispositif de traitement d'air comprimé selon la revendication 1, **caractérisé en ce que** l'unité de commande électronique (26) commune est reliée par des lignes électriques (29, 30), d'une part à l'unité modulaire (4) recevant les soupapes (5) du régulateur de pression, les soupapes (6) du séchoir à air et les soupapes (7) de la soupape de protection multicircuit, et d'autre part à l'unité modulaire (9) recevant les soupapes (10) du système de ressorts pneumatiques, tandis que les deux unités modulaires (4 et 9) sont en liaison par une conduite pneumatique (8).

5. Dispositif de traitement d'air comprimé selon la revendication 1, **caractérisé en ce que** l'unité de commande électronique (26) commune est réunie à une unité modulaire (4) recevant les soupapes (5) du régulateur de pression, les soupapes (6) du séchoir à air et les soupapes (7) de la soupape de protection multicircuit.

6. Dispositif de traitement d'air comprimé selon la revendication 1, **caractérisé en ce que** l'unité de commande électronique (26) commune est réunie à une unité modulaire (9) recevant les soupapes (10) du système de ressorts pneumatiques.

7. Dispositif de traitement d'air comprimé selon la revendication 1, **caractérisé en ce que** l'unité de commande électronique (26) commune comporte un processeur (28) commun pour l'exploitation et la régulation des soupapes (5) du régulateur de pression, des soupapes (6) du séchoir à air, des soupapes (7) de la soupape de protection multicircuit et des soupapes (10) du système de ressorts pneumatiques.

8. Dispositif de traitement d'air comprimé selon la revendication 1 ou 7, **caractérisé en ce qu'**il est prévu une soupape pilote (44) qui commande d'une part des soupapes (5) du régulateur de pression et/ou des soupapes (6) du séchoir à air et/ou des soupapes (7) de la soupape de protection multicircuit et d'autre part au moins une soupape (10) du système de ressorts pneumatiques.

9. Dispositif de traitement d'air comprimé selon une ou plusieurs des revendications 1 à 8, **caractérisé en ce que** la soupape de protection multicircuit est conçue pour la protection des deux circuits de freinage de service (I, II) et la ou les soupapes (10) du système de ressorts pneumatiques sont alimentées à partir de réservoirs (20, 22) des deux circuits de freinage de service.

10. Dispositif de traitement d'air comprimé selon une ou plusieurs des revendications 1 à 9, **caractérisé en ce qu'**il est prévu un dispositif d'affichage (31) qui est en liaison, par une ligne de données (32), avec l'unité de commande électronique (26) commune.
